# EUROPEAN PATENT SPECIFICATION

(11) **EP 1 250 341 B1**
(45) Date of publication and mention of the grant of the patent: **31.03.2004**
(21) Application number: 01946866.9
(22) Date of filing: 29.01.2001
(51) Int. Cl.: C07F 9/53, C07F 9/50

(54) **A METHOD OF GENERATING A FUNCTIONALISED ARYLPHOSPHINE**
EIN VERFAHREN ZUR HERSTELLUNG EINES FUNKTIONALISIERTEN ARYLPHOSPHINS
PROCEDE DE PRODUCTION D'UNE ARYLPHOSPHINE FONCTIONNALISEE

(30) Priority: 28.01.2000 GB 0001859
(43) Date of publication of application: 23.10.2002
(73) Proprietor: THE UNIVERSITY OF LIVERPOOL, Liverpool L69 3BX (GB)
(72) Inventor: XIAO, J. Leverhulme Cen. for Innovative Catalysis, Liverpool L69 7ZD (GB); CHEN, W. Leverhulme Cen. for Innovative Catalysis, Liverpool L69 7ZD (GB)
(74) Representative: Wishart, Ian Carmichael
(86) International application number: PCT/GB2001/000367
(87) International publication number: WO 2001/055156

(56) References cited:
- US-A- 4 514 575
- US-A- 4 973 631
- TROST B.M.: "On the effect of a cation binding site in an asymmetric ligand for a catalyzed nucleophilic substitution reaction" JOURNAL OF THE AMERICAN CHEMICAL SOCIETY., vol. 119, no. 25, - 25 June 1997 (1997-06-25) pages 5962-5963, XP002166185 AMERICAN CHEMICAL SOCIETY, WASHINGTON, DC., US ISSN: 0002-7863
- CHEN G.J.: "Polyfluoroalkylation of bromoaromatic compounds via perfluoroalkylcopper intermediates" JOURNAL OF FLUORINE CHEMISTRY., vol. 43, no. 2, - May 1989 (1989-05) pages 207-228, XP002166186 ELSEVIER SEQUOIA. LAUSANNE., CH ISSN: 0022-1139 cited in the application
- CHEN G.J.: "Perfluoroalkylations and perfluorooxaalkylations. Part 2. Copper- mediated cross-coupling of secondary perfluoroalkyl iodides and aryl halides" JOURNAL OF FLUORINE CHEMISTRY., vol. 65, no. 1-2, - November 1993 (1993-11) pages 59-65, XP002166187 ELSEVIER SEQUOIA. LAUSANNE., CH ISSN: 0022-1139 cited in the application
- CHEN W ET AL: "Novel and efficient synthesis of perfluoroalkylated arylphosphines" TETRAHEDRON LETTERS,NL,ELSEVIER SCIENCE PUBLISHERS, AMSTERDAM, vol. 41, no. 19, May 2000 (2000-05), pages 3697-3700, XP004203235 ISSN: 0040-4039
- CHEN W.: "Palladium-catalyzed synthesis of aqueous, fluorous, and supercritical CO2-soluble phosphines" ORGANIC LETTERS., vol. 2, no. 17, - 24 August 2000 (2000-08-24) pages 2675-2677, XP002166188 ACS, WASHINGTON, DC., US ISSN: 1523-7060

## Description

The present invention relates to a method of generating a functionalised arylphosphine, novel intermediates and novel functionalised arylphosphines. These functionalised arylphosphines may find applications in catalysis, in such reaction media as, but not limited to, water, supercritical carbon dioxide (scCO₂) and perfluorinated solvents.

Arylphosphines are the most widely used ligands in homogenous catalysis. One of the most significant problems associated with homogeneous catalysis is the separation of catalyst from product. The problem can be overcome by immobilising the catalyst in a medium that is immiscible with the product phase. Water, perfluorinated solvents and scCO₂ have extensively been studied as immobilising phases, due either to the immiscibility of the first two with common organic liquids or to the controllable solvent strength in the case of scCO₂. The key to effective immobilisation of the catalysts is to design and synthesise aqueous, fluorous and scCO₂ soluble ligands. A ligand can be made water soluble by bonding it to a hydrophilic group such as, for example, a sulfonate, hydroxy, ammonium or carboxylate, whereas by attaching it to a perfluorinated moiety or a long alkyl chain the ligand becomes either fluorous soluble or scCO₂ soluble.

The present invention provides a novel method of generating a functionalised arylphosphine bearing, for example, a fluoroalkyl, alkyl, alkenyl, carboxy, siloxy, or silyl group. Some of these groups can also be used to anchor the arylphosphine ligand onto polymers and inorganic oxides.

Fluorinated arylphosphines are disclosed in US 4681693, US 4454349 and US 4011267. Synthesis of the arylphosphines involves the preparation of fluoroalkylether substituted aryl halides followed by metathesis with PCl₃, except in the case of fluoroamide substituted arylphosphines where fluoro esters are reacted with expensive arninoarylphosphines. A disadvantage of such methods is that each arylphosphine has to be prepared from a fluorinated aryl halide, meaning that the preparation is less flexible and less efficient in terms of the use of the expensive fluorinated reagents in comparison to a method in which fluorinated substituents would be incorporated into the arylphosphines in the last few steps of the preparation. Also, for every arylphosphine each step of the preparation has to be optimised. Another disadvantage of these methods is that they use organolithium reagents, which are moisture and oxygen sensitive and relatively unstable and thus require special handling. Yet a further disadvantage is that the reaction with PCl₃ is conducted at -78°C, making commercial operations both difficult and costly. Analogous arylphosphines are also disclosed in the US 4454349; US 4011267 Kainz, D. Koch, W. Baumann, and W. Leitner, Angew. Chem. Int. Ed. Engl, 1997, 36, 1628; B. Betzemeier, and P. Knochel, Angew. Chem. Int. Ed. Engl., 1997, 36, 2623; and P. Bhattacharyya, D. Gudmunsen, E.G. Hope, R.D.W. Kemmitt, D.R. Paige, and A.M. Stuart, J. Chem. Soc., Perkin Trans. 1, 1997, 3609.

All the processes described have either the aforementioned or more limitations.

US 5929273, US 5684181, US 5247183 and US 505618 disclose the preparation of water-soluble arylphosphines by sulfonation. The problems with sulfonation are well known in the art and include harsh reaction conditions, the formation of mixtures of products and labourious separation procedures.

US 5925785 discloses the preparation of sulfonated aryl phosphines using pyrophoric phosphorus hydrides.

Carboxylated arylphosphines are much less well documented. Their preparation can be found in O. Herd, A. Hebler, P. Machnitski, M. Topper and O. Stelzer, Catal. Today, 1998,42,413: V. Ravidar, H Hemling, H. Schumann and, J. Blum, Syn. Commun, 1992,22, 841 and W. A Herrmann and C. W. Kohpaintner, Angew. Chem. Int. Ed. Engl., 1993, 32, 1524 and references therein. The starting materials, such as phenylphosphine, iodobenzoic acid and bromobenzenitrile are expensive and/or difficult to handle.

Trost, in J. Am. Chem Soc., 1997, 119, 5962 describes acetylene substitution reactions requiring both CuBr and a palladium catalyst. This chemistry is significantly different to, for example, that of alkene substitution.

Thus a new method that is versatile, simple and economical and that uses readily accessible starting materials would be highly desirable.

According to a first aspect of the present invention there is provided a method of generating a functionalised arylphosphine comprising the steps of reacting
i) a haloarylphosphine oxide with
ii) one of:
   a) an organohalide,
   b) an alkene;
   c) carbon monoxide and a compound bearing a hydroxy group;
   d) an amine; and
   e) an alcohol or thiol
   in the presence of
iii) a metal or a metal containing compound
   to generate
iv) a substituted arylphosphine oxide, and
v) reducing the substituted arylphosphine oxide to generate
vi) the functionalised arylphosphine.

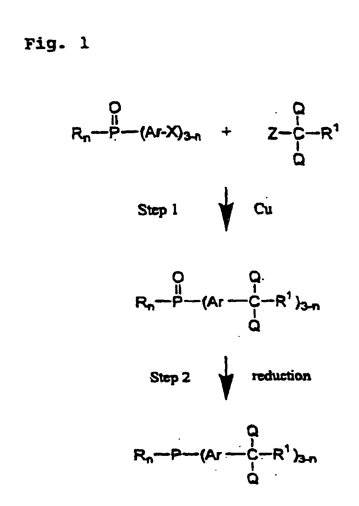

In one embodiment the haloarylphosphine oxide is reacted with an organo halide in the presence of a metal such as, for example, copper or a copper containing compound and the substituted arylphosphine oxide is reduced to form the functionalised arylphosphine. A general reaction scheme for such a reaction is illustrated in Fig. 1.

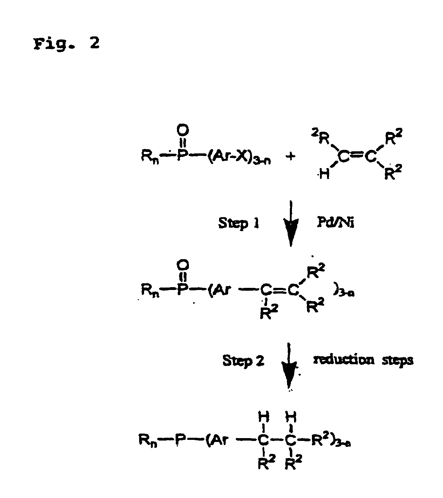

In another embodiment the haloarylphosphine oxide is reacted with an alkene in the presence of a metal such as, for example, palladium and/or nickel or a palladium and/or nickel containing compound and the substituted arylphosphine oxide is reduced to form the functionalised arylphosphine. A general reaction scheme for such a reaction is illustrated in Fig 2.

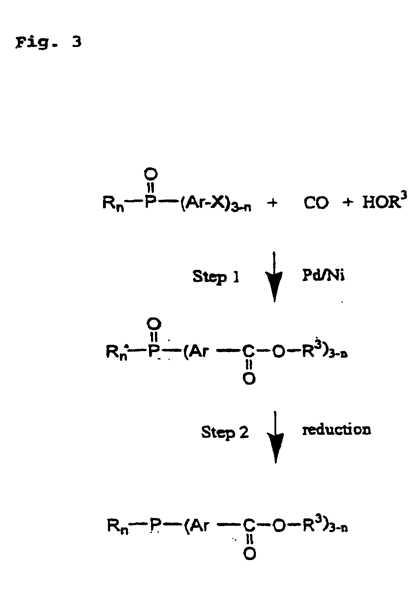

In yet another embodiment the haloarylphosphine oxide is reacted with carbon monoxide and a compound bearing a hydroxy group, in the presence of a metal such as, for example, palladium and/or nickel or a palladium and/or nickel containing compound and the substituted arylphosphine oxide is reduced to form the functionalised arylphosphine. A general reaction scheme for such a reaction is illustrated in Fig.3.

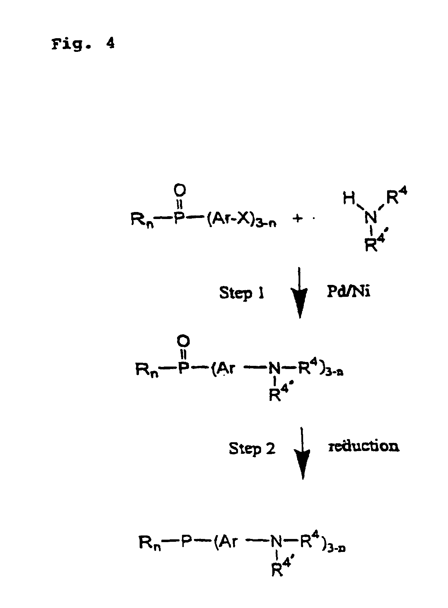

In yet another embodiment the haloarylphosphine oxide is reacted with an amine in the presence of a metal, such as, for example, palladium and/or nickel or a palladium and/or nickel containing compound and the substituted arylphosphine oxide is reduced to form the functionalised arylphosphine. A general reaction scheme for such a reaction is illustrated in Fig. 4.

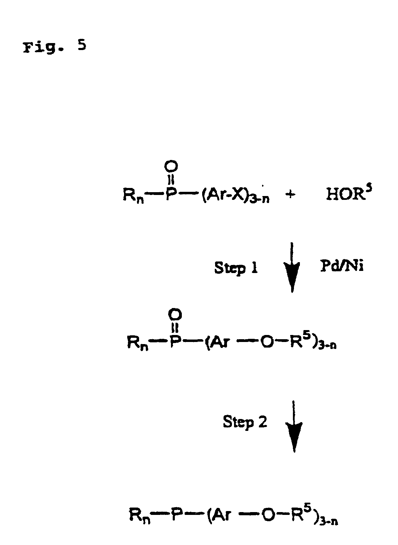

In yet another embodiment the haloarylphosphine oxide is reacted with an alcohol or thiol in the presence of a metal, such as, for example, palladium and/or nickel or a palladium and/or nickel containing compound and the substituted arylphosphine oxide is reduced to form the functionalised arylphosphine. A general reaction scheme for such a reaction with an alcohol is illustrated in Fig. 5.

The methods of the invention utilize haloarylphosphine oxides of the general formula I, II or III to generate a functionalised arylphosphine.

Such compounds can be produced by standard methodology.
Formula I is 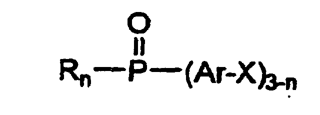 where:
R is selected from the group consisting of :
   alkyl; alkenyl; cycloalkyl; aryl; alkoxy and aralkyl
   and any such group additionally substituted by one or more of the following groups:
      alkyl; cycloalkyl, aryl, alkoxy and halo;

   Preferred R groups include: C₁-C₁₀ alkyl groups, phenyl and naphythl.
Ar is an aryl group
   and any such group additionally substituted by one or more of the following groups:
   alkyl; alkenyl; aryl; alkoxy; aralkyl and alkoxycarbonyl;
   any of which may be substituted by one or more of the following groups:
      alkyl; alkenyl; alkoxy; alkoxycarbonyl; siloxy; silyl and halo;
   Preferred aryl groups include: phenyl and naphthyl.
X is selected from the group consisting of Cl, Br and I;
and n is 0, 1 or 2;
with the proviso that each Rₙ can be the same or different, and each (Ar-X) can be the same or different.
Formula II is 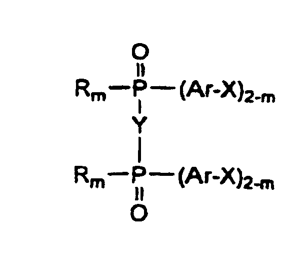 where:
R, Ar and X are as defined in formula I above,
Y is a linking group, and
m is 0 or 1.

Preferably Y is a linking group selected from: acyclic bridges including alkano groups, such as, for example, methano; alkeno groups, such as, for example, etheno; cyclic hydrocarbon bridges (which may be saturated or unsaturated) such as, for example, epicyclopenta or benzeno; and groups such as binaphthyl and biphenyl and substituted variants thereof.
Formula III is 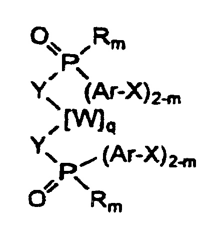 where [w]_{q} is P_{q} O_{q} V_{q} Y_{(q-1)}
where q is a whole number; and V is (Ar-X) or R and
R, Ar and X are as defined in formula I above and Y and m are as defined in formula II above.
Thus, for example where q=1
[W]_{q} is as shown in formula IV
Formula IV is 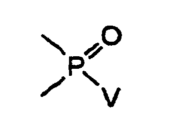 and when q=2
[w]_{q} is as shown in formula V.
Formula V is 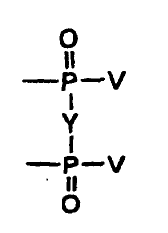 By reacting the haloarylphosphine oxides of general Formula I, II or III such that X, the halo group, is substituted by R⁶, intermediates of the general formula VI, VII & VIII are obtained.
Formula VI is 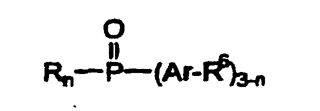 Where R, n and Ar are as defined in formula I above, and
R⁶ is
a)

   -CQ₂R¹
b) 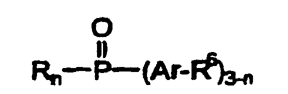
c) 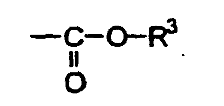
d) 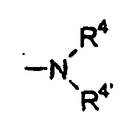
e)

   ―O―R⁵

   or

   ―S―R⁵
Formula VII is 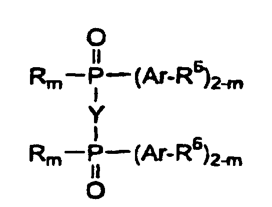 where R and Ar, are as defined in formula I above, Y and m are as defined in formula II above; and
R⁶ is as defined in Formula VI above; and
Formula VIII is 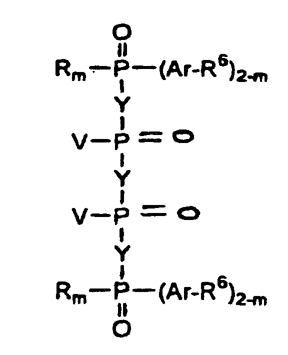 where R and Ar are as defined in formula I above, Y and m are as defined in formula II above, V is as defined in formula III above or is (Ar -R⁶) and R⁶ is as defined in formula VI above.
The substitution reaction generating these intermediates can be initiated by one of five routes:
a) using Z CQ₂R¹
   where Q is selected from F and Cl and Q can be the same or different.
   where Z = Cl, Br, or I;
   and R¹ is selected from the group consisting of: alkyl, alkenyl, aryl ,cycloalkyl and alkoxy and any of the above substituted by an alkyl, cycloalkyl, aryl, alkoxy, carboxy, halo, siloxy or silyl group.
   In this case the substitution is as illustrated in Fig. 1.
   Referring to Fig. 1, Z CQ₂R¹ is reacted in a first step with a haloarylphosphine oxi de of eg. formula I in the presence of copper or a copper containing compound. CQ₂ R¹ is substituted for X in the presence of a catalytical amount of a stabilising ligand such as bipyridine. The intermediate is then subjected to a second step in which it is reduced by, for example, a chlorosilane;
b) using an alkene of the general formula 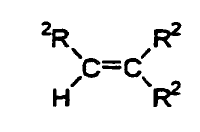 where each R² is independently selected from the group consisting of: hydrogen alkyl, cycloalkyl, alkenyl, aryl, alkoxy, hydroxy, carboxy, and halo. The alkyl, cycloalkyl, alkenyl, aryl, alkoxy and carboxy groups may be substituted by an alkyl, cycloalkyl, aryl, alkoxy, carboxy, halo, hydroxy, amino, siloxy or silyl group.
   In this case the substitution is as illustrated in Fig. 2.
   Referring to Fig. 2 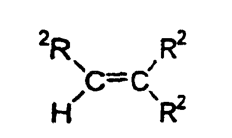 is reacted in a first step with a haloarylphosphone oxide of, eg. formula I in the presence of nickel and/or palladium or a nickel and/or palladium containing compound. 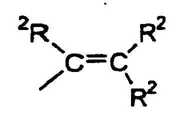 is substituted for X and the by-product of the reaction is adsorbed by, for example, a base, such as, for example, sodium acetate. The intermediate is then subjected to hydrogenation to saturate it, and the phosphine oxide is then reduced:
c) using carbon monoxide (CO) and a compound bearing a hydroxy group (HOR³) one generates a group 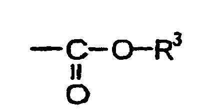 where R³ is selected from the group consisting of: alkyl, alkenyl, cycloalkyl and aryl and any of the above may be substituted by an alkyl, cycloalkyl, aryl, alkoxy, carboxy, halo, siloxy or silyl group.
   Referring to Fig. 3.

   CO +HOR³

   is reacted in a first step with a haloarylphosphine oxide of, eg. formula I in the presence of nickel and/or palladium or a nickel and/or palladium containing compound, 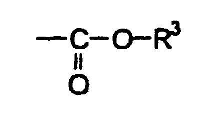 is substituted for X and the by-product is absorbed by, for example, a base. The intermediate is then subjected to a reduction with, for example, chlorosilane;
d) using an amine of the formula 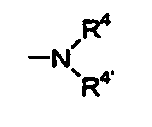 where R⁴ is an alkyl, aryl or aralkyl any of which may be substituted with an alkyl, alkenyl, alkoxy, cycloalkyl or aryl group and R^{4'} is R⁴ or hydrogen and additionally R⁴ and R^{4'} may form a cyclic amine which may include one or more heteroatoms, such as, for example, N, S and O and may additionally comprise an alkyl, aryl or aralkyl substituent.
   Referring to Fig. 4, H N R⁴ R^{4'} is reacted in a first step with a haloarylphosphine oxide of eg. formula 1 in the presence of nickel or palladium and/or a nickel and/or palladium containing compound. 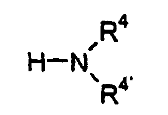 is substituted for X and the by-product of the reaction is adsorbed by, for example, a base such as, for example, Cs₂CO₃ and NaO^{t}Bu. The intermediate is then subjected to a second step in which it is reduced; and
e) using an alcohol of the formula HOR⁵ or a thiol of the formula HSR⁵
   where R⁵ is selected from the group consisting of : alkyl, aryl, and aralkyl and any of the above may be substituted by an alkyl, alkenyl, cycloalkyl or aryl group.

In the case of alcohol the substitution is as illustrated in Fig. 5.

Referring to Fig. 5, HOR⁵ is reacted in a first step with a haloarylphosphine oxide of eg. formula I in the presence of palladium and/or nickel or a palladium and/or nickel containing compound.

OR⁵ is substituted for X in the presence of a base, such as, for example, an alkali carbonate or alkoxide, for example Cs₂CO₃ or NaO^{t}Bu.

The intermediate is then subjected to a reduction.

The reaction with the thiol is basically identical with'O' being replaced by 'S'.

Of course, in the general reaction mechanisms exemplified with reference to Figs. 1 to 5, starter compounds of the general formula I can be replaced with compounds of the general formula II or III.

In each of the above the term alkyl refers to a straight-chain or branched alkyl group having from 1 to 30 carbon atoms, alkenyl refers to a C₂ - C₃₀ group with at least one carbon-carbon double bond, aryl refers to a C₅ - C₃₀ cyclic aromatic group, alkoxy refers to an alkyl group bound to an oxygen atom, aralkyl refers to an alkyl group substituted by an aryl substituent, cycloalkyl refers to a C₃ - C₃₀ cyclic alkyl group, alkoxycarbonyl refers to -C(O)OR⁷ group wherein R⁷ is an alkyl group, siloxy refers to [-Si(R⁸)(R⁸)-O-]ₚR⁸ with each R⁸ being independently selected from alkyl or aryl and where p = 1-100, silyl refers to SiR⁹₃ wherein each R⁹ is an alkyl or alkoxy; and halo refers to fluorine, chlorine and bromine.

By subjecting the substituted arylphosphine oxide intermediates generated in step 1 to a reduction step (step 2 of the reaction mechanisms illustrated in Figs. 1 to 5) the desired aryl phosphines are obtained.

It may however be necessary to conduct an additional hydrolysis step to make carboxylated arylphosphine.
When R¹ , R² , R³, R⁴ or R⁵ contain carbon carbon double bonds, hydrogenation may be carried out before the reduction of the phosphine oxide using methods established in the art.

The resulting functionalised arylphosphines have the general formula IX, X, or XI.
Formula IX is

Rₙ―P―(Ar-R⁶)₃₋ₙ

where R, n and Ar are as identified in formula I and R⁶ is as identified with reference to formula VI.
Formula X is 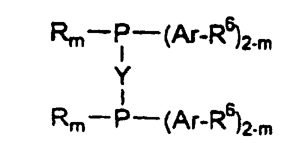 where R, and Ar are as defined in Formula I above, Y and m are as defined in Formula II above and R⁶ is as defined in formula VI above.
Formula XI is 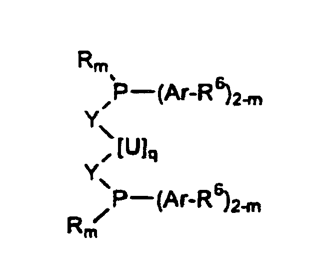 where R and Ar are as defined in formula I above, Y and m are as defined in formula II above, R⁶ is as defined in formula VI above and [U]q is Pq Vq Y (q-1) where q is a whole number; and V is (Ar-X) or R and is defined in formula III above or is (Ar-R⁶).
Thus for example when q = 1 formula XI is 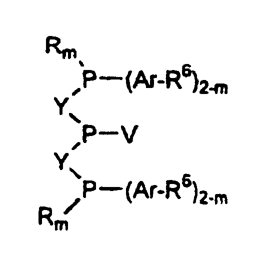 and when q = 2 formula XI is

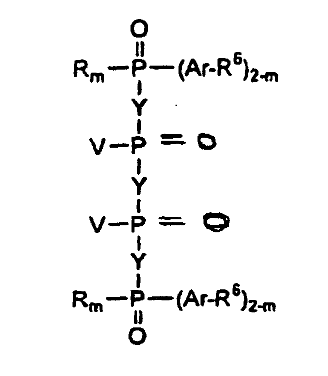

The invention is further described by way of example only with reference to the specific examples.

### Example 1

### Tris(4-perflurohexylphenyl)phosphine oxide

A mixture of tris(4-bromophenyl)phosphine oxide (515 mg, 1 mmol), 1-iodoperfluorohexane (1.405 g, 3.15 mmol), copper powder (450 mg, 7 mmol), 2,2'-bipyridine (34 mg, 0.2 mmol) and DMSO (20 ml) was stirred for 36 h at 120 °C. After cooling to room temperature, the reaction mixture was diluted with CHCl₃ (50 ml) and water (50 ml), filtered through a pad of Celite and washed with CHCl₃ (2 x 20 ml). The organic layer was separated, washed with 1N HCl (2 x 50 ml), water (2 x 50 ml) and brine (50 ml), dried (MgSO₄) and evaporated under reduced pressure to give the crude product, which upon recrystallisation from EtOH yielded the title compound (1.123 g, 91%) as colourless needles.

### Example 2

### (4-perfluorohexylphenyl)diphenylphosphine oxide

A mixture of 4-bromophenyldiphenylphosphine oxide (2.143 g, 6.0 mmol), 1-iodoperfluorohexane (2.809 g, 6.3 mmol), copper powder (900 mg, 14.1 mmol), 2,2'-bipyridine (67 mg, 0.4 mmol) and DMSO (20 ml) was stirred for 15 h at 120 °C. After cooling to room temperature, the reaction mixture was diluted with CHCl₃ x (50 ml) and water (50 ml), filtered through a pad of Celite and washed with CHCl₃ (2 x 20 ml). The organic layer was separated, washed with 1N HCl (2 x 50 ml), water (2 x 50 ml) and brine (50 ml), dried (MgSO₄) and evaporated under reduced pressure to give the crude product. Recrystallisation from hexane afforded the pure title compound as colourless needles (3.413 g, 95.4%).

### Example 3

### Bis(4-perfluorohexylphenyl)phenylphosphine oxide

A mixture of bis(4-bromophenyl)phenylphosphine oxide (1.308 g, 3.0 mmol), 1-iodoperfluorohexane (2.809 g, 6.3 mmol), copper powder (900 mg, 14 mmol), 2,2'-bipyridine (67 mg, 0.4 mmol) and DMSO (20 ml) was stirred for 24 h at 120 °C After cooling to room temperature, the reaction mixture was diluted with CHCl₃ (50 ml) and water (50 ml), filtered through a pad of Celite and washed with CHCl₃ (2 x 20 ml). The organic layer was separated, washed with 1N HCl (2 x 50 ml), water (2 x 50 ml) and brine (50 ml), dried (MgSO₄) and evaporated under reduced pressure to give the crude product. Recrystallisation from hexane afforded the pure title compound as colourless needles (2.606 g, 95%).

### Example 4

### Tris(4-perfluorooctylphenyl)phosphine oxide

A mixture of tris(4-bromophenyl)phosphine oxide (1.030 g, 2 mmol), 1-iodoperfluorooctane (3.440 g, 6.30 mmol), copper powder (900 mg, 14 mmol), 2,2'-bipyridine (67 mg, 0.4 mmol), DMSO (2.188 g, 28 mmol) and perfluoro-1,3-dimethylcyclohexane (20 ml) was refluxed for 72 h. After cooling to room temperature, the reaction mixture was diluted with CHCl₃ (200 ml), filtered through a pad of Celite and washed with CHCl₃ (2 x 20 ml). The filtrate was washed with 1N HCl (2 x 100 ml), water (2 x 100 ml) and brine (100 ml), dried (MgSO₄) and evaporated under reduced pressure. The residue was recrystallised from CHCl₃-hexane affording the title compound as colourless needles (2.863 g, 93%).

### Example 5

### Tris[4-(1H,2H-perfluoro-1-octenyl)phenyl]phosphine oxide

A mixture of tris(4-bromophenyl)phasphine oxide (1.030 g, 2 mmol), 1H, 1H, 2H-perfluoro-1-octene (2.284 g, 6.6 mmol), palladacycle (56 mg, 0.06 mmol), NaOAc (656 mg, 8 mmol) and DMF (20 ml) was stirred for 24 h at 125°C. DMF was removed under reduced pressure. The residue was dissolved in CHCl₃ (100 ml), washed with water (2 x 100 ml) and brine (100 ml), dried (MgSO₄) and evaporated under reduced pressure. The residue was purified by flash chromatography (SiO₂, EtOAc:CHCl₃ = 1:8) to give the title compound as a pale-yellow oil (2.384 g, 91%).

### Example 6

### [4-(1H,2H-perfluoro-1-octenyl)phenyl]diphenylphosphine oxide

A mixture of 4-bromophenyldiphenylphosphine oxide (2.143 g, 6.0 mmol), 1H,1H,2H-perfluoro-1-octene (2.284 g, 6.6 mmol), palladacycle (56 mg, 0.06 mmol), NaOAc (656 mg, 8 mmol) and DMF (20 ml) was stirred for 20 h at 125 °C. The solvent was removed under reduced pressure. The residue was dissolved in CHCl₃ (100 ml), washed with water (2 x 100 ml) and brine (100 ml), dried (MgSO4) and evaporated under reduced pressure. The residue was purified by flash chromatography (SiO₂, EtOAc:CHCl3 = 1:8) to give the title compound as pale-yellow oil (3.461 g, 92.7%).

### Example 7

### Bis[4-(1H,2H-perfluoro-1-octenyl)phenyl]phenylphosphine oxide

A mixture of bis(4-bromophenyl)phenylphosphine oxide (1.308 g, 3.0 mmol), 1H,1H,2H-perfluoro-1-octene (2.284 g, 6.6 mmol), palladacycle (56 mg, 0.06 mmol), NaOAc (656 mg, 8 mmol) and DMF (20 ml) was stirred for 24 h at 125 °C. The solvent was removed under reduced pressure. The residue was dissolved in CHCl₃ (100 ml), washed with water (2 x 100 ml) and brine (100 ml), dried (MgSO₄) and evaporated under reduced pressure. The residue was purified by flash chromatography (SiO₂, EtOAc:CHCl₃ = 1:8) to give the title compound as pale-yellow oil (2.714 g, 93.6%).

### Example 8

### Tris[4-(2-butoxycarbonylvinyl)phenyl]phosphine oxide

A mixture of tris(4-bromophenyl)phosphine oxide (2.060 g, 4 mmol), n-butyl acrylate (2.307 g, 18mmol), palladacycle (56 mg, 0.06 mmol), NaOAc (1.312 mg, 16 mmol) and DMF (50 ml) was stirred for 15 h at 125 °C. DMF was removed under reduced pressure. The residue was dissolved in CHCl₃ (50 ml), washed with water (2 x 50 ml) and brine (50 ml), dried (MgSO₄) and evaporated under reduced pressure. The residue was purified by flash chromatography (SiO₂, EtOAc:CHCl₃ = 1:8) to give the title compound as colourless crystals (2.312 g, 98%).

### Example 9

### Tris[4-(1-hexenyl)phenyl]phsphine oxide

A mixture of tris(4-bromophenyl)phosphine oxide (2.060 g, 4.0 mmol), 1-hexene (3.030 g, 36 mmol), palladacycle (56 mg, 0.06 mmol), NaOAc (1.312 mg, 16.0 mmol) and DMF (50 ml) was stirred for 24 h at 125 °C in an autoclave under 10 atm of nitrogen. The solvent was removed under reduced pressure. The residue was dissolved in CHCl₃ (50 ml), washed with water (2x 50 ml) and brine (50 ml), dried (MgSO₄) and evaporated under reduced pressure. The residue was purified by flash chromatography (SiO₂, CHCl₃) to give the title compound as colourless oil (1.920 g, 91.4%), containing about 10% of tris[4-(2-hexenyl)phenyl]phosphine oxide.

### Example 10

### Tris[4-(1-decenyl)phenyl]phsphine oxide

A mixture of tris(4-bramophenyl)phosphine oxide (2.060 g, 4 mmol), 1-decene (2.525 g, 18 mmol), palladacycle (56 mg, 0.06 mmol), NaOAc (1.312 mg, 16 mmol) and DMF (50 ml) was stirred for 24 h at 125 °C. DMF was removed under reduced pressure. The residue was dissolved in CHCl₃ (50 ml), washed with water (2 x 50 ml) and brine (50 ml), dried (MgSO₄) and evaporated under reduced pressure. The residue was purified by flash chromatography (SiO₂, CHCl₃) to give the title compound as a colourless oil (2.556 g, 93%) containing about 10% of tris [4-(2-decenyl)phenyl]phosphine oxide.

### Example 11

### Tris[4-(1-hexadecenyl)phenyl]phosphine oxide

A mixture of tris(4-bromophenyl)phosphine oxide (2.060 g, 4.0 mmol), 1-hexadecene (3.366 g, 15 mmol), palladacycle (56 mg, 0.06 mmol), NaOAc (1.312 mg, 16.0 mmol) and DMF (50 ml) was stirred for 30 h at 125 °C. The solvent was removed under reduced pressure. The residue was dissolved in CHCl₃ (50 ml), washed with water (2 x 50 ml) and brine (50 ml), dried (MgSO₄) and evaporated under reduced pressure. The residue was purified by flash chromatography (SiO₂, CHCl₃) to give the title compound as colourless oil (3.256 g, 86%), containing about 10% of tris[4-(2-hexadecenyl)phenyl]phosphine oxide.

### Example 12

### Tris[4-(1H,1H,2H,2H-perfluorooctyl)phenyl]phosphine oxide

A mixture of tris[4-(1H,2H-perfluoro-1-octenyl)phenyl]phosphine oxide (2.611 g, 2.0 mmol), 10% Pd/C (50 mg) and EtOAc (40 ml) was stirred for 5 h at room temperature under 10 bar of hydrogen, and filtered through a pad of Celite. The filtrate was evaporated under reduced pressure to give the title compoundas a pale-yellow oil, which solidified on standing (2.660 g, 100%).

### Example 13

### Tris[4-(1H,1H,2H,2H-perfluoro-1-octenyl)phenyl]phosphine

A mixture of tris[4-(1H,1H,2H,2H-perfluoro-1-octenyl)phenyl]phosphine oxide (666 mg, 0.5 mmol), trichlorosilane (339 mg, 2.5 mmol), triethylamine (380 mg, 2.8 mmol) and toluene (10 ml) was stirred for 5 h at 120 °C. After cooling to room temperature, saturated NaHCO₃ aqueous solution (0.5 ml) was added. The mixture was stirred for 5 min at room temperature, and filtered through a pad of alumina, washed with toluene (3 x 15 ml). The filtrate was evaporated under reduced pressure to give the title compound as white solid (630 mg, 96%).

Reduction of the other phosphine oxides were similarly performed in one step using a chlorosilane as reductant according to previously established procedures known in the art, with yields > 95% in all cases. Saturation of the carbon-carbon double bonds in the substituents on the phenyl rings was accomplished by hydrogenation, and conversion of the alkoxycarbonyl groups to carboxylates was by hydrolysis, all with yields > 95%.

## Claims

1. A method of generating a functionalised arylphosphine comprising the steps of reacting
i) a haloarylphosphine oxide with
ii) one of:
a) an organohalide,
b) an alkene;
c) carbon monoxide and a compound bearing a hydroxy group;
d) an amine; and
e) an alcohol or thiol
in the presence of
iii) a metal or a metal containing compound
to generate
iv) a substituted arylphosphine oxide, and
v) reducing the substituted arylphosphine oxide to generate
vi) the functionalised arylphosphine.

2. A method as claimed in claim 1 herein the metal or metal containing compound is selected from the group comprising copper, copper containing compound, palladium and/or nickel and palladium and/or nickel containing compound.

3. A method as claimed in claim 1 or 2, wherein the haloarylphosphine oxide comprises a compound of formula (I): 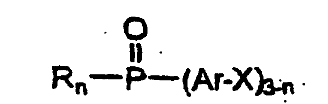 where:
R is selected from the group consisting of :
alkyl; alkenyl; cycloalkyl; aryl; alkoxy and aralkyl
and any such group additionally substituted by one or more of the following groups:
alkyl; cycloalkyl, aryl, alkoxy and halo;
Ar is an aryl group
and any such group additionally substituted by one or more of the following groups:
alkyl; alkenyl; aryl; alkoxy; aralkyl and alkoxycarbonyl;
any of which may be substituted by one or more of the following groups:
alkyl; alkenyl; alkoxy; alkoxycarbonyl; siloxy; silyl and halo;
X is selected from the group consisting of Cl, Br and I;
and n is 0, 1 or 2;
with the proviso that each Rₙ can be the same or different, and each (Ar-X) can be the same or different.

4. A method as claimed in claim 1 or 2 wherein the haloarylphosphine oxide comprises a compound of formula (II): 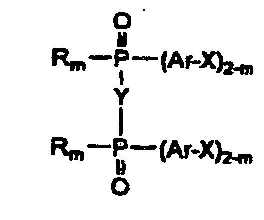 where:
R, Ar and X are as defined in formula ( I ),
Y is a linking group, and
m is 0 or 1.

5. A method as claimed in claim 1 or 2 wherein the haloarylphosphine oxide comprises a compound of formula (III): 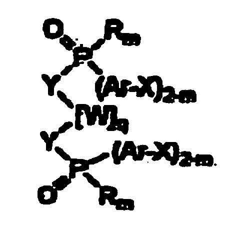 where [w]_{q} is P_{q} O_{q} V_{q} Y_{(q-1)}
where q is a whole number; and V is (Ar-X) or R and
R, Ar and X are as defined in formula (I) and Y and m are as defined in formula (II)

6. A method as claimed in claims 1, 2 or 3 wherein said substituted arylphosphine oxide comprises a compound of formula (VI): 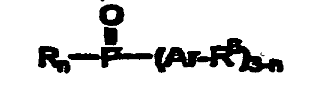 where:
R, n and Ar are as defined in formula (I)
and R⁶ is
a)
-CQ₂R¹
where Q is selected from F and CI and Q can be the same or different AND R¹ is selected from the group consisting of: alkyl, alkenyl, aryl, cycloalkyl and alkoxy; and any of the above groups substituted by an alkyl, cycloalkyl, aryl, alkoxy, carboxy, halo, siloxy or silyl group;
b) 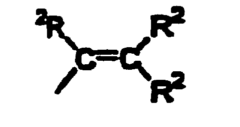 where each R² is independently selected from the group consiting of ; hydrogen, alkyl, cycloalkyl, alkenyl aryl, alkoxy, hydroxy, carboxy, halo, amino, siloxy or silyl group.
c) 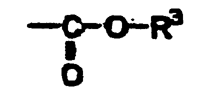 where R³ is selected from the group consisting of: alkyl, alkenyl, cycloalkyl and aryl.
d) 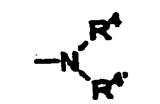 where R⁴ is an alkyl, aryl, aralkyl, alkenyl, alkoxy or cycloalkyl group, R^{4'} is R⁴ or hydrogen, or R⁴ and R⁴ form a cyclic amine, said cyclic amine optionally comprising one or more heteroatoms, selected from the group comprising, N, S and O and/or an alkyl, aryl or aralkyl substituent; or
e)
**―O―R**^{**5**}
or
**―S―R**^{**5**}
where R⁵ is selected from the group consisting of: alkyl, aryl, and aralkyl and any of alkeny or, cycloalkyl group.

7. A method as claimed in claims 1, 2 or 4 wherein said substituted arylphosphine oxide comprises a compound of formula ( VII ): 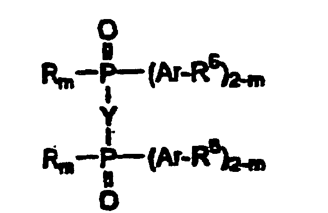 where R and Ar, are as defined in formula (I) Y and m are as defined in formula (II);
and
R⁶ is as defined in Formnla (VI).

8. A method as claimed in claims 1, 2 or 5 wherein said substituted arylphosphine oxide comprises a compound of formula (VIII): 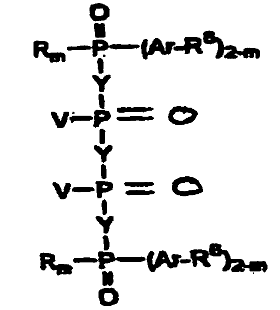 where R and Ar are as defined in formula (I), Y and m are as defined in formula (II), V is as defined in formula (III) or V is (Ar-R⁶) and R⁶ is as defined in formula (VI).

9. A method as claimed in claims 1, 2, 3 or 6 wherein the fuctionalised arylphosphine comprises a compound of formula (IX):
**R**_{**n**}**―P―(Ar-R**^{**6**}**)**_{**3-n**}
where R, n and Ar are as defined in formula (I) and R⁶ is as defined in formula (VI).

10. A method as claimed in claims 1, 2, 4 or 7 wherein the fuctionalised arylphosphine comprises a compound of formula (X): 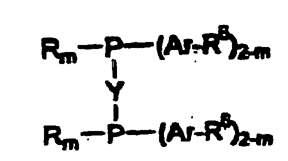 where R and Ar are as defined in formula (I), Y and m are as defined in formula (II) and R⁶ is as defined in formula (VI).

11. A method as claimed in claims 1, 2, 5 or 8 wherein the fuctionalised arylphosphine comprises a compound of formula (XI): 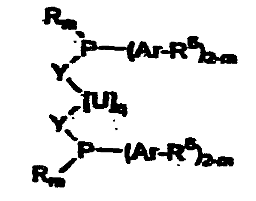 where R and Ar are as defined in formula (I), Y and m are as defined in formula (II), R⁶ is as defined in formula (VI) and [U]q is Pq Vq Y (q-1) where q is a whole member; and V is as defined in formula (III) or is (Ar-R⁶).

12. A method as claimed in claims 3 to 11 wherein R is selected from the group consisting of C₁ to C₁₀ alkyl groups, phenyl and naphythl.

13. A method as claimed in claims 4, 5, 7, 9, 10 and 11 wherein Y is selected from the group comprising acyclic bridges including alkano groups, alkeno groups; cyclic hydrocarbon bridges; and binaphthyl and biphenyl groups and substituted variants thereof.

## Patentansprüche

1. Verfahren zur Herstellung eines funktionalisierten Arylphosphins, das die folgenden Stufen umfasst
i) Umsetzung eines Halogenarylphosphinoxids mit
ii) einer der folgenden Komponenten
a) einem Organohalogenid,
b) einem Alken,
c) Kohlenmonoxid und einer eine Hydroxygruppe enthaltenden Verbindung,
d) einem Amin und
e) einem Alkohol oder Thiol
in Gegenwart von
iii) einem Metall oder einer metallhaltigen Verbindung
unter Bildung von
iv) einem substituierten Arylphosphinoxid und
v) Reduktion des substituierten Arylphosphinoxids unter Bildung von
vi) dem funktionalisierten Arylphosphin.

2. Verfahren nach Anspruch 1, worin das Metall oder die metallhaltige Verbindung aus der Gruppe ausgewählt ist, welche umfasst Kupfer, eine kupferhaltige Verbindung, Palladium und/oder Nickel und Palladium und/oder eine nickelhaltige Verbindung.

3. Verfahren nach Anspruch 1 oder 2, worin das Halogenarylphosphinoxid eine Verbindung der folgenden Formel (I) umfasst 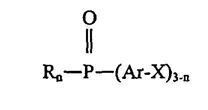 worin
R aus der Gruppe ausgewählt ist, die besteht aus
Alkyl, Alkenyl, Cycloalkyl, Aryl, Alkoxy und Aralkyl
und irgendwelche dieser Gruppen, die zusätzlich substituiert sind durch eine oder mehrere der folgenden Gruppen Alkyl, Cycloalkyl, Aryl, Alkoxy und Halogen,
Ar für eine Arylgruppe steht
und irgendwelche dieser Gruppen, die zusätzlich substituiert sind durch eine oder mehrere der folgenden Gruppen Alkyl, Alkenyl, Aryl, Alkoxy, Aralkyl and Alkoxycarbonyl,
wobei diese Gruppen durch eine oder mehrere der folgenden Gruppen substituiert sein können
Alkyl, Alkenyl, Alkoxy, Alkoxycarbonyl, Siloxy, Silyl und Halogen,
X aus der Gruppe ausgewählt ist, die besteht aus Cl, Br und I,
und n für 0, 1 oder 2 steht,
mit der Maßgabe, dass jedes Rₙ gleich oder verschieden sein kann und jedes (Ar-X) ebenfalls gleich oder verschieden sein kann.

4. Verfahren nach Anspruch 1 oder 2, worin das Halogenarylphosphinoxid eine Gruppe der folgenden Formel (II) umfasst 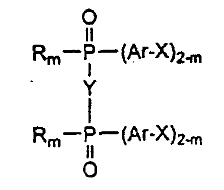 worin R, Ar und X wie bei der Formel (I) definiert sind,
Y eine Brückengruppe ist und
m für 0 oder 1 steht.

5. Verfahren nach Anspruch 1 oder 2, worin das Halogenarylphosphinoxid eine Verbindung der folgenden Formel (III) umfasst 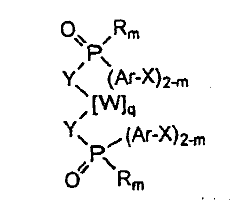 worin [w]_{q} für P_{q}O_{q}V_{q}Y_{(q-1)} steht,
worin q eine ganze Zahl ist und V für (Ar-X) oder R steht und
R, Ar und X wie in der Formel (I) definiert sind und Y und m wie in der Formel (II) definiert sind.

6. Verfahren nach Anspruch 1, 2 oder 3, worin das substituierte Arylphosphinoxid eine Verbindung der folgenden Formel (VI) umfasst 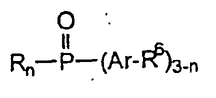 worin
R, n und Ar wie in der Formel (I) definiert sind und
R⁶ steht
für a)
-CQ₂R¹
worin Q ausgewählt ist aus F und Cl und Q gleich oder verschieden sein kann und R¹ ausgewählt ist aus der Grupp die besteht aus Alkyl, Alkenyl, Aryl, Cycloalkyl und Alkoxy
und irgendeiner dieser Gruppen, die substituiert ist durch Alkyl, Cycloalkyl, Aryl, Alkoxy, Carboxy, Halogen, Siloxy oder Silyl,
für b) 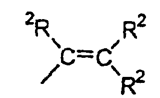 worin jeder Rest R² unabhängig ausgewählt ist aus der Gruppe, die besteht aus Wasserstoff, Alkyl, Cycloalkyl, Alkenyl, Aryl, Alkoxy, Hydroxy, Carboxy, Halogen, Amino, Siloxy oder Silyl,
für c) 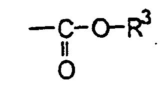 worin R³ aus der Gruppe ausgewählt ist, die besteht aus Alkyl, Alkenyl, Cycloalkyl und Aryl,
für d) 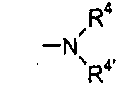 worin R⁴ für Alkyl, Aryl, Aralkyl, Alkenyl, Alkoxy oder Cycloalkyl steht, R^{4'} für R⁴ oder Wasserstoff steht oder R⁴ und R^{4'} ein cyclisches Amin bilden, wobei dieses cyclische Amin optional ein oder mehr Heteroatome enthalten kann, die ausgewählt sind aus der Gruppe, welche umfasst N, S und O und/oder einen Alkyl-, Aryl- oder Aralkylsubstituenten, oder
für e)
―O―R⁵
oder
―S―R⁵
worin R⁵ ausgewählt ist aus der Gruppe, die besteht aus Alkyl, Aryl und Aralkyl oder irgendeiner der Gruppen Alkenyl oder Cycloalkyl.

7. Verfahren nach Anspruch 1, 2 oder 4, worin das substituierte Arylphosphinoxid eine Verbindung der folgenden Formel (VII) umfasst 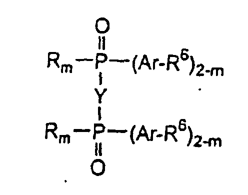 worin R und Ar wie in der Formel (I) definiert sind, Y und m wie in der Formel (II) definiert sind,
und
R⁶ wie in der Formel (VI) definiert ist.

8. Verfahren nach Anspruch 1, 2 oder 5, worin das substituierte Arylphosphinoxid eine Verbindung der folgenden Formel (VIII) umfasst 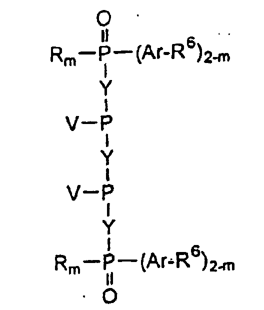 worin R und Ar wie in der Formel (I) definiert sind, Y und m wie in der Formel (II) definiert sind, V wie in der Formel (III) definiert ist oder V für (Ar-R⁶) steht und R⁶ wie in der Formel (VI) definiert ist.

9. Verfahren nach Anspruch 1, 2, 3 oder 6, worin das funktionalisierte Arylphosphin eine Verbindung der folgenden Formel (IX) umfasst
―Rₙ―P―(Ar-R⁶)₃₋ₙ
worin R, n und Ar wie in der Formel (I) definiert sind und R⁶ wie in der Formel (VI) definiert ist.

10. Verfahren nach Anspruch 1, 2, 4 oder 7, worin das funktionalisierte Arylphosphin eine Verbindung der folgenden Formel (X) umfasst 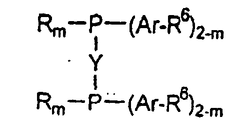 worin R und Ar wie in der Formel (I) definiert sind, Y und m wie in der Formel (II) definiert sind und R⁶ wie in der Formel (VI) definiert ist.

11. Verfahren nach Anspruch 1, 2, 5 oder 8, worin das funktionalisierte Arylphosphin eine Verbindung der folgenden Formel (XI) umfasst 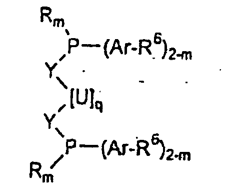 worin R und Ar wie in der Formel (I) definiert sind, Y und m wie in der Formel (II) definiert sind, R⁶ wie in der Formel (VI) definiert ist und [U]_{q} für P_{q} V_{q} Y_{(q-1)} steht, worin q eine ganze Zahl ist, und
V wie in der Formel (III) definiert ist oder für (Ar-R⁶) steht.

12. Verfahren nach Anspruch 3 bis 11, worin R ausgewählt ist aus der Gruppe, die besteht aus C₁ bis C₁₀-Alkylgruppen, Phenyl und Naphtyl.

13. Verfahren nach Anspruch 4, 5, 7, 8, 10 und 11, worin Y ausgewählt ist aus der Gruppe, die umfasst acyclische Brücken unter Einschluss von Alkanogruppen, Alkenogruppen, cyclischen Kohlenwasserstoffbrücken und Binaphtyl- und Biphenylgruppen und substituierte Varianten hiervon.

## Revendications

1. Procédé pour générer une arylphosphine fonctionnalisée comprenant les étapes consistant à mettre en réaction
i) un oxyde de haloarylphosphine avec
ii) l'un d'entre :
a) un organohalogénure ;
b) un alcène ;
c) du monoxyde de carbone et un composé portant un groupe hydroxy ;
d) une amine ; et
c) un alcool ou un thiol
en présence de
iii) un métal ou un composé contenant du métal pour générer
iv) un oxyde d'arylphosphine substitué, et
v) en réduisant l'oxyde d'arylphosphine substitué
pour générer
vi) l'arylphosphine fonctionnalisée.

2. Procédé selon la revendication 1 dans lequel le métal ou le composé contenant du métal est choisi parmi le groupe comprenant le cuivre, un composé contenant du cuivre, le palladium et/ou le nickel, et un composé contenant du palladium et/ou du nickel.

3. Procédé selon la revendication 1 ou 2 dans lequel l'oxyde de haloarylphosphine comprend un composé de formule (I) : 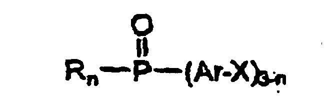 dans laquelle :
R est choisi parmi le groupe comprenant :
un groupe alkyle ; un groupe alcényle ; un groupe cycloalkyle ; un groupe aryle ; un groupe alcoxy et un groupe aralkyle
et l'un quelconque des groupes également substitués par un ou plusieurs des groupes suivants :
un groupe alkyle ; un groupe cycloalkyle ; un groupe aryle ; un groupe alcoxy et un groupe halo ;
Ar est un groupe aryle
et l'un quelconque de ces groupes substitués en outre par un ou plusieurs des groupes suivants :
un groupe alkyle ; un groupe alcényle ; un groupe aryle ; un groupe alcoxy ; un groupe aralkyle et un groupe alcoxycarbonyle ;
dont l'un quelconque parmi eux peut être substitué par un ou plusieurs des groupes suivants :
un groupe alkyle ; un groupe alcényle ; un groupe alcoxy ; un groupe alcoxycarbonyle ; un groupe siloxy ; un groupe silyle et
un groupe halo ;
X est choisi parmi le groupe comprenant Cl, Br et I ;
et n représente 0, 1 ou 2 ;
à condition que tous les Rₙ puissent être les mêmes ou différents, et que tous les (Ar-X) puissent être les mêmes ou différents.

4. Procédé selon la revendication 1 ou 2 dans lequel l'oxyde de haloarylphosphine comprend un composé de formule (II) : 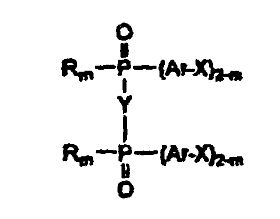 dans laquelle :
R, Ar et X sont tels que définis dans la formule (I).
Y est un groupe de liaison, et
m représente 0 ou 1.

5. Procédé selon la revendication 1 ou 2 dans lequel l'oxyde de haloarylphosphine comprend un composé de formule (III) : 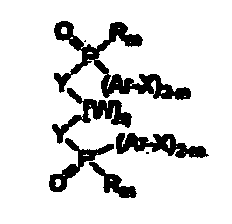 dans laquelle [W]_{q} est P_{q}O_{q}V_{q}Y_{(q-1)}
dans laquelle q est un nombre entier ; et V est (Ar - X) ou R ; et,
R, Ar et X sont tels que définis dans la formule (I) et Y et m sont tels que définis dans la formule (II).

6. Procédé selon la revendication 1, 2 ou 3 dans lequel ledit oxyde d'arylphosphine substitué comprend un composé de formule (VI) 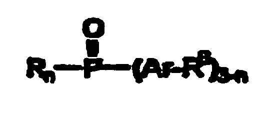 dans laquelle :
R, n et Ar sont tels que définis dans la formule (I) et R⁶ est
a)
**-CQ**_{**2**}**R**^{**1**}
dans laquelle Q est choisi parmi F et Cl et Q peut être le même ou différent et R¹ est choisi parmi le groupe comprenant un alkyle, un alcényle, un aryle, un cycloalkyle et un alcoxy ; et l'un quelconque des groupes ci-dessus substitués par un groupe alkyle, un groupe cycloalkyle, un groupe aryle, un groupe alcoxy, un groupe carboxy, un groupe halo, un groupe siloxy ou un groupe silyle ;
b) 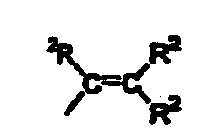 dans laquelle chaque R² est indépendamment choisi parmi le groupe comprenant : un hydrogène, un groupe alkyle, un groupe cycloalkyle, un groupe alcényle, un groupe aryle, un groupe alcoxy, un groupe hydroxy, un groupe carboxy, un groupe halo, un groupe amino, un groupe siloxy ou un groupe silyle.
c) 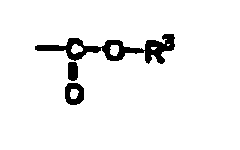 dans laquelle R³ est choisi parmi le groupe comprenant : un groupe alkyle, un groupe alcényle, un groupe cycloalkyle et un groupe aryle.
d) 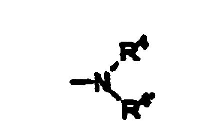 dans laquelle R⁴ est un groupe alkyle, un groupe aryle, un groupe aralkyle, un groupe alcényle, un groupe alcoxy ou un groupe cycloalkyle, R^{4'} est R⁴ ou un hydrogène, ou R⁴ et R^{4'} forment une amine cyclique, ladite amine cyclique comprenant facultativement un ou plusieurs hétéroatomes, choisis parmi le groupe comprenant N, S et O et/ou un substituant alkyle, aryle ou aralkyle ; ou
e)
**―O―R**^{**5**}
ou
**―S―R**^{**5**}
dans laquelle R⁵ est choisi parmi le groupe comprenant un groupe alkyle, un groupe aryle, et un groupe aralkyle et l'un quelconque des groupes alcényle ou cycloalkyle.

7. Procédé selon la revendication 1, 2 ou 4 dans lequel ledit oxyde d'arylphosphine substitué comprend un composé de formule (VII) : 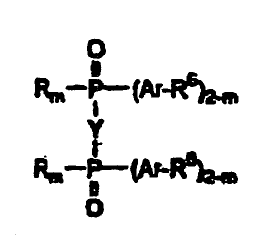 dans laquelle R et Ar sont tels que définis dans la formule (I) Y et m sont tels que définis dans la formule (II) ;
et
R⁶ est tel que défini dans la formule (VI).

8. Procédé selon la revendication 1, 2 ou 5 dans lequel ledit oxyde d'arylphosphine substitué comprend un composé de formule (VIII) : 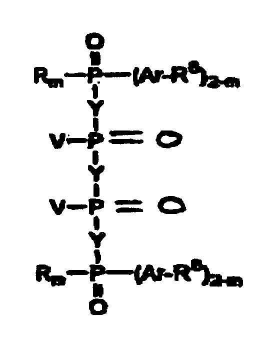 dans laquelle R et Ar sont tels que définis dans la formule (I), Y et m sont tels que définis dans la formule (II), V est tel que défini dans la formule (III) ou V est (Ar - R⁶) et R⁶ est tel que défini dans la formule (VI).

9. Procédé selon la revendication 1, 2, 3 ou 6 dans lequel l'arylphosphine fonctionnalisée comprend un composé de formule (IX) :
**R**_{**n**}**―P―(Ar-R**^{**6**}**)**_{**3-n**}
dans laquelle R, n et Ar sont tels que définis dans la formule (I) et R⁶ est tel que défini dans la formule (VI).

10. Procédé selon la revendication 1, 2, 4 ou 7 dans lequel l'arylphosphine fonctionnalisée comprend un composé de formule (X) : 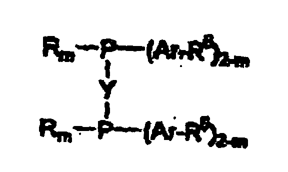 dans laquelle R et Ar sont tels que définis dans la formule (I), Y et m sont tels que définis dans la formule (II) et R⁶ est tel que défini dans la formule (VI).

11. Procédé selon la revendication 1, 2, 5 ou 8 dans lequel l'arylphosphine fonctionnalisée comprend un composé de formule (XI) : 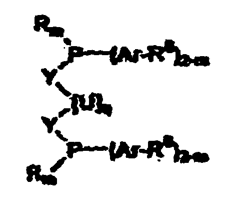 dans laquelle R et Ar sont tels que définis dans la formule (I), Y et m sont tels que définis dans la formule (II), R⁶ est tel que défini dans la formule (VI) et [U]q est Pq Vq Y (q-1) dans laquelle q est un nombre entier ; et V est tel que défini dans la formule (III) ou est (Ar - R⁶).

12. Procédé selon les revendications 3 à 11 dans lequel R est choisi parmi le groupe comprenant les groupes alkyles en C₁ à C₁₀, un phényle et un naphtyle.

13. Procédé selon la revendication 4, 5, 7, 8, 10 et 11 dans lequel Y est choisi parmi le groupe comprenant des ponts acycliques comprenant les groupes alcano, les groupes alcéno ; les ponts hydrocarbonés cycliques ; et les groupes binaphtyle et biphényle et les variantes substituées de ceux-ci.
